Europäisches Patentamt

European Patent Office

Office européen des brevets

(11) Veröffentlichungsnummer: **0 123 074**
**A2**

(12) **EUROPÄISCHE PATENTANMELDUNG**

(21) Anmeldenummer: 84102322.9

(22) Anmeldetag: 05.03.84

(51) Int. Cl.³: **F 02 B 33/00**
**F 02 B 33/44, F 02 B 37/00**
**F 02 B 37/02, F 02 B 37/12**

(30) Priorität: 30.03.83 DE 3311626

(43) Veröffentlichungstag der Anmeldung:
31.10.84 Patentblatt 84/44

(84) Benannte Vertragsstaaten:
CH FR GB IT LI

(71) Anmelder: **M.A.N. MASCHINENFABRIK**
**AUGSBURG-NÜRNBERG Aktiengesellschaft**
**Stadtbachstrasse 1**
**D-8900 Augsburg(DE)**

(72) Erfinder: **Mikota, Thomas**
**Nordstr. 30**
**D-8904 Friedberg(DE)**

(54) Aufgeladene Viertakt-Brennkraftmaschine.

(57) Bei einer aufgeladenen Vier-Takt-Brennkraftmaschine ist je Zylinder eine durch dessen Zylinderkopf führende Umblaseleitung vorgesehen, durch die eine direkte Verbindung zwischen einer Ladeluftsammelleitung und einer Abgassammelleitung hergestellt ist. Über jede Umblaseleitung ist somit permanent oder taktweise gesteuert Ladeluft für eine Erhöhung der im Aufladeaggregat wirksamen Arbeitsgasmenge zur Abgassammelleitung hin umblasbar. Ferner sind über jede Umblaseleitung, gesteuert durch ein einziges Gaswechselventil, dem zugehörigen Zylinder über einen kurzen, von ihr abzweigenden Gaswechselkanal die erforderliche Verbrennungsluft zuführbar, aber auch die anfallenden Abgase zur Abgassammelleitung hin abführbar. Um diese Funktionen erfüllen zu können, weist jede Umblaseleitung innerhalb des Zylinderkopfes eine, einen Strömungswiderstand bildende Form und spezielle Gestaltung auf.

Fig.1

EP 0 123 074 A2

Croydon Printing Company Ltd.

PB 3216/1625          - 1 -

Aufgeladene Vier-Takt-Brennkraftmaschine

Die Erfindung betrifft eine aufgeladene Vier-Takt-Brennkraftmaschine mit Merkmalen entsprechend dem Oberbegriff des Anspruches 1.

Es ist Aufgabe der Erfindung, eine aufgeladene Vier-Takt-Brennkraftmaschine zu schaffen, die, gegenüber herkömmlichen Vier-Takt-Brennkraftmaschinen, kompakter aufgebaut ist, weniger bewegte Teile umfaßt, schwerölbetriebstauglich ist, einen besseren Wirkungsgrad aufweist und größere Reserven für Teillastbetrieb sowie Beschleunigung besitzt.

Diese Aufgabe ist erfindungsgemäß durch eine aufgeladene Vier-Takt-Brennkraftmaschine mit Merkmalen, so wie im Anspruch 1 angegeben, gelöst. Vorteilhafte Einzelheiten und Ausgestaltungen dieser Lösung sind in den Unteransprüchen gekennzeichnet.

Gegenüber einer herkömmlichen abgasaufgeladenen Vier-Takt-Brennkraftmaschine erbringt die erfindungsgemäße Maschine folgende Vorteile. Mit der erfindungsgemäßen Maschine ist eine Leistungs-Drehzahl-Charakteristik erreichbar, die eine wesentlich größere Flexibilität aufweist als ein herkömmlicher stau- oder stoßaufgeladener Motor. Niedrige Anforderungen an den Aufladesystem-Wirkungsgrad schaffen größere Reserven für einen Betrieb der Maschine im Teillastbereich bzw. für deren Beschleunigung. Aufgrund der erfindungsgemäßen Merkmale ist eine gezielte Aus-

./.

legung der Maschine auf ein bestimmtes Lastkollektiv möglich, ohne daß Nachteile im restlichen Leistungsbereich in Kauf genommen werden müßten. Eine Reduzierung des Kraftstoffverbrauches ist mit der erfindungsgemäßen Maschine infolge verschiedener Einflußnahmen möglich, so z.B. durch die Absenkung der mechanischen Verluste gegenüber herkömmlichen Vier-Takt-Maschinen mit mehreren bewegten Teilen; außerdem können durch die erfindungsgemäße Ausgestaltung der Maschine die Ladungswechselverluste reduziert werden, was auch mit zu einem niedrigeren Kraftstoffverbrauch führt. Im übrigen läßt die erfindungsgemäße Ausbildung der Maschine eine optimale Gestaltung der Verbrennungsabläufe zu hinsichtlich einer kompromißlosen Brennraumform, einem günstigen ε-Wert und einer vorteilhaften Gemischbildung. Die erfindungsgemäße Ausgestaltung der Maschine verbessert ganz entscheidend die Verträglichkeit hinsichtlich der in zunehmendem Maße schlechter werdenden Kraftstoffqualitäten, d.h. die erfindungsgemäße Brennkraftmaschine erweist sich in jeder Hinsicht als schwerölbetriebstauglich. Darüber hinaus werden die Arbeitsbedingungen der bekanntermaßen problembehafteten Auslaßventile durch deutliche Absenkung der mittleren Temperatur verbessert.

Nachstehend ist anhand der Zeichnung und dort dargestellter mehrerer Ausführungsbeispiele das Wesen der erfindungsgemäßen aufgeladenen Vier-Takt-Brennkraftmaschine näher erläutert. In der Zeichnung zeigen jeweils stark schematisiert:

Fig.1 und 2          ein erstes Ausführungsbeispiel einer aufgeladenen Vier-Takt-Brennkraftmaschine nach der Erfindung in verschiedenen Ansichten,

Fig.3 und 4          ein zweites Ausführungsbeispiel einer aufgeladenen Vier-Takt-Brennkraftmaschine nach der Erfindung in verschiedenen Ansichten,

Fig.5 und 6          ein drittes Ausführungsbeispiel einer aufgeladenen Vier-Takt-Brennkraftmaschine nach der Erfindung in verschiedenen Ansichten,

Fig.7 und 8      ein viertes Ausführungsbeispiel einer aufgeladenen Vier-Takt-Brennkraftmaschine nach
der Erfindung in verschiedenen Ansichten,

Fig.9 und 10      ein fünftes Ausführungsbeispiel einer aufgeladenen Vier-Takt-Brennkraftmaschine nach
der Erfindung in verschiedenen Ansichten,

Fig.11 und 12      ein sechstes Ausführungsbeispiel einer aufgeladenen Vier-Takt-Brennkraftmaschine nach
der Erfindung in verschiedenen Ansichten.

In den Figuren sind gleiche oder einander entsprechende Teile der
dargestellten aufgeladenen Vier-Takt-Brennkraftmaschinen mit gleichem Bezugszeichen angezogen.

In jeder der Figuren ist stark schematisiert und nur in jenem, für
das Verständnis der Erfindung notwendigen Teil, eine insgesamt
mit 1 angezogene, aufgeladene Vier-Takt-Brennkraftmaschine dargestellt; die einzelnen Zylinder derselben sind jeweils mit 2,
die darin arbeitenden Kolben mit 3 und die oben aufgesetzten
Zylinderköpfe mit 4 angezogen. Die Vier-Takt-Brennkraftmaschine 1
arbeitet auf der Basis direkt in die Zylinder 2 eingespritzten
Kraftstoffes bzw. Brennstoffes mit Selbstzündung oder Fremdzündung. Der Kraftstoff kann flüssig oder gasförmig oder fest
sein oder durch eine Kombination von flüssigen, gasförmigen
oder festen Stoffen gebildet sein. Die aufgeladene Vier-Takt-
Brennkraftmaschine 1 umfaßt ein abgasbetriebenes, insgesamt mit
5 bezeichnetes Aufladeaggregat, das wenigstens einen, erforderlichenfalls auch mehrere in Reihe oder parallel geschaltete Abgasturbolader oder auch ein anderes Ladegerät, beispielsweise
einen oder mehrere Druckwellenlader, aufweist. Sofern es sich
als zweckmäßig oder als erforderlich erweist, kann dem Aufladeaggregat 5 ein Fremdantrieb 6 zugeordnet sein, der entweder
eine Belieferung der Brennkraftmaschine mit hinreichend verdichteter Luft vom Start bis in einen Bereich kleiner Last oder

./.

eine.andere Art von Unterstützung sicherstellt. Bei dem Fremdantrieb 6 kann es sich um einen oder mehrere Elektromotore,
je nach Anzahl der vorhandenen Ladegeräte, oder um in Serie oder
parallel dem/den Verdichter(n) des Aufladeaggregates 6 geschaltete
Gebläse handeln. An das Aufladeaggregat 5 sind eine Ladeluftsammelleitung 7, in die komprimierte Luft, ggf. über einen Ladeluftkühler 8, zur Verbrennungsluftversorgung der Zylinder 2 förderbar ist sowie eine Abgassammelleitung 9 zur Aufnahme des
aus den Zylindern 2 ausgestoßenen Abgases angeschlossen.

Zur Erfüllung der aufgabengemäßen Forderungen ist diese aufgeladene Vier-Takt-Brennkraftmaschine erfindungsgemäß entsprechend
dem nachfolgend beschriebenen System ausgebildet.

Je Zylinder 2 der Vier-Takt-Brennkraftmaschine 1 ist eine insgesamt mit 10 bezeichnete Umblaseleitung vorgesehen, die jeweils
durch den Zylinderkopf 4 eines Zylinders 2 hindurchführt und
eine direkte Verbindung zwischen der Ladeluftsammelleitung 7 und
der Abgassammelleitung 9 herstellt. Über jede dieser Umblaseleitungen 10 ist permanent oder taktweise gesteuert Ladeluft von
der Ladeluftsammelleitung 7 für eine Erhöhung der im Aufladeaggregat 5 wirksamen Arbeitsgasmenge (= umgeblasene Luftmenge +
Abgasmenge) zur Abgassammelleitung 9 hin umblasbar. Über jede
der Umblaseleitungen 10 ist außerdem, gesteuert durch ein einziges Gaswechselventil 11 pro Zylinder 2, diesem über einen kurzen,
von ihr abzweigenden Gaswechselkanal 12 die erforderliche Verbrennungsluft zuführbar. Des weiteren sind durch jede der Umblaseleitungen 10 auch die anfallenden Abgase aus dem zugehörigen Zylinder 2 zur Abgassammelleitung 9 hin abführbar. Damit jede
der Umblaseleitungen 10 diese Mehrfachfunktion übernehmen kann,
weist jede derselben innerhalb des Zylinderkopfes 4 im Bereich
vor und nach der Abzweigstelle des jeweiligen Gaswechselkanales 12
eine einen Strömungswiderstand bildende Form auf; jede Umblaseleitung 10 ist dabei derart gestaltet, daß

a) Ladeluft von der Ladeluftsammelleitung 7 bei geschlossenem
   Gaswechselventil 11 in begrenzter Menge zur Abgassammelleitung 9 strömen kann,

./.

b) Ladeluft von der Ladeluftsammelleitung 7 bei offenem Gaswechselventil 11 mit kleinem Widerstand in den zugehörigen Zylinder 2
strömen kann, und

c) Abgas bei offenem Gaswechselventil 11 aus dem Zylinder 2 mit
kleinem Widerstand zur Abgassammelleitung 9 hin strömen kann.

Vorab der nachfolgenden detaillierten Beschreibung möglicher Konfigurationen der Umblaseleitung 10 seien zunächst deren einzelne
Abschnitte definiert. Die ladeluftsammelleitungsseitige Eintrittsebene jeder Umblaseleitung 10 ist mit 13 und jede abgassammelleitungsseitige Austrittsebene mit 14 bezeichnet. Jenes Teil jeder
Umblaseleitung 10, das sich von der Abzweigstelle des Gaswechselkanales 12 bis zur ladeluftsammelleitungsseitigen Eintrittsebene 13
erstreckt, ist mit 15 und 16 angezogen, wobei 15 den außerhalb des
Zylinderkopfes 4 verlaufenden Abschnitt und 16 den innerhalb des
Zylinderkopfes 4 verlaufenden Abschnitt dieses Umblaseleitungsteiles bezeichnet. Jenes Teil jeder Umblaseleitung 10, das sich
von der Abzweigstelle des Gaswechselkanales 12 bis hin zur abgassammelleitungsseitigen Austrittsebene 14 erstreckt, ist mit
17 und 18 angezogen, wobei 17 den außerhalb des Zylinderkopfes 4
liegenden Abschnitt und 18 den innerhalb des Zylinderkopfes 4
liegenden Abschnitt dieses Umblaseleitungsteiles betrifft.

Der kurze, von jeder Umblaseleitung 10 abzweigende Gaswechselkanal 12 verläuft vorzugsweise koaxial zur Längsachse des Gaswechselventiles 11. Vorzugsweise liegen die Achse des Gaswechselkanales 12 und die Achse jenes Teiles 17, 18 der Umblaseleitung 10,
das sich von der Abzweigstelle bis zur abgassammelleitungsseitigen Austrittsebene 14 erstreckt, in einer Ebene, die auch
die Längsachse des Gaswechselventiles 11 aufnimmt. Dabei verläuft jener Abschnitt 18 der Umblaseleitung 10 innerhalb des
Zylinderkopfes 4 bogenförmig gekrümmt und geht in strömungsgünstiger Form in den kurzen Gaswechselkanal 12 über. Das Teil 16
jeder Umblaseleitung 10 dagegen verläuft innerhalb des Zylinderkopfes 4 spiralförmig verwunden und mündet oberhalb der Abzweigstelle des Gaswechselkanales 11 seitlich in das Teil 18 der Umblaseleitung 10 ein; dabei bildet die verwundene Leitungsführung
der Umblaseleitung 10 im Bereich oberhalb der Abzweigstelle des
Gaswechselkanales 12 den für den gewünschten Ladungswechselverlauf erforderlichen Strömungswiderstand.

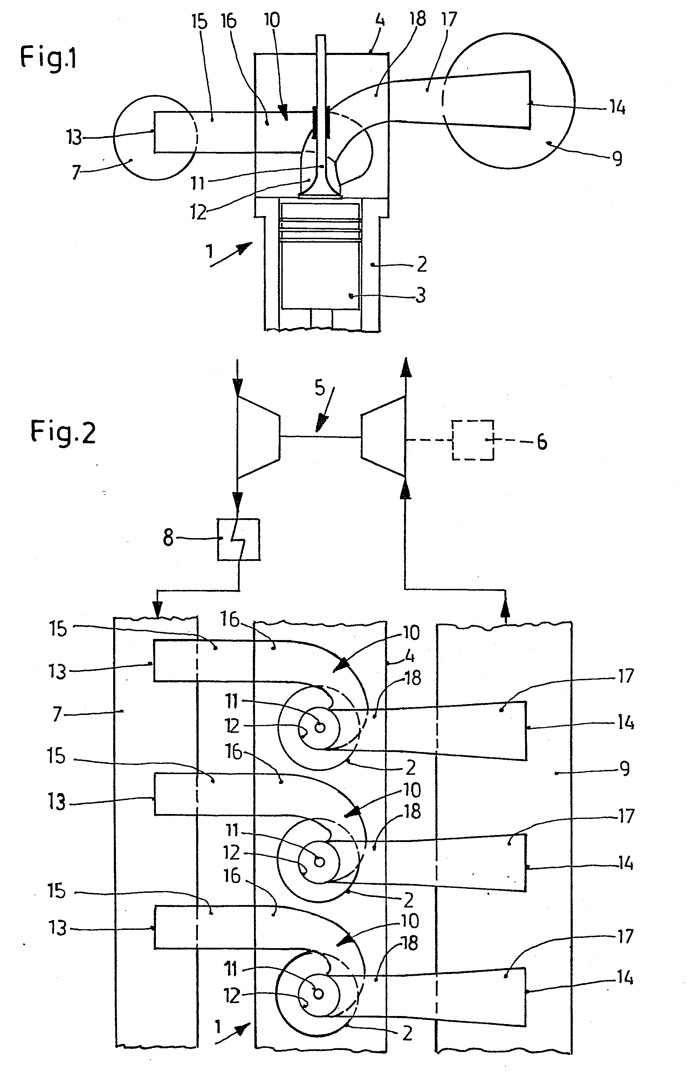

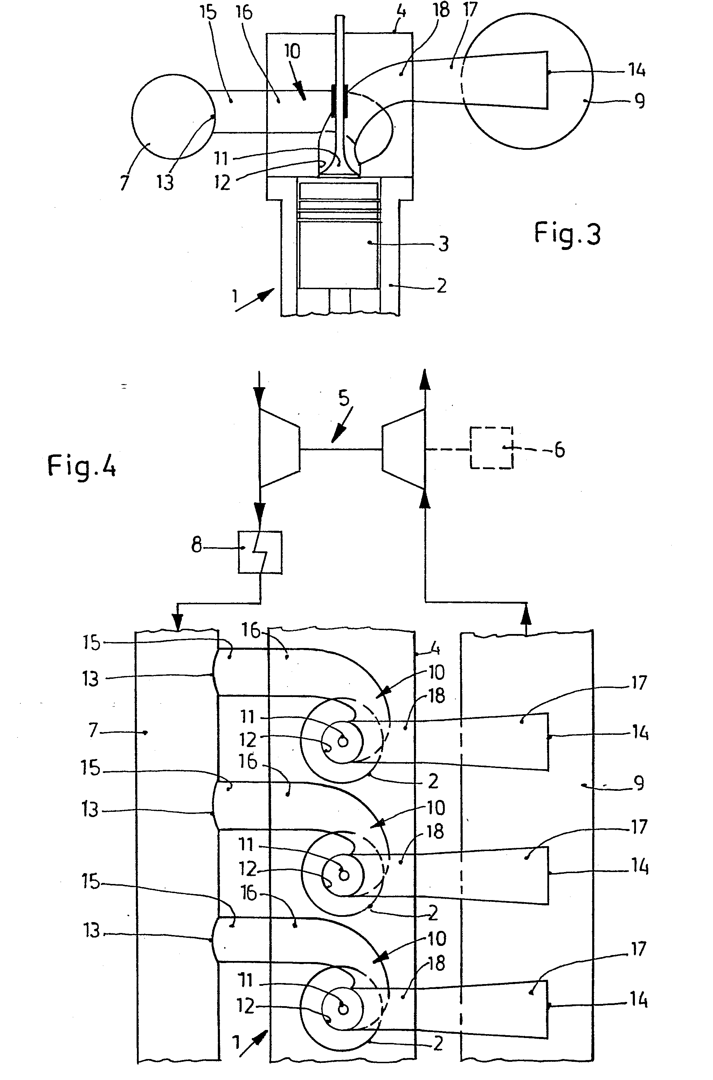

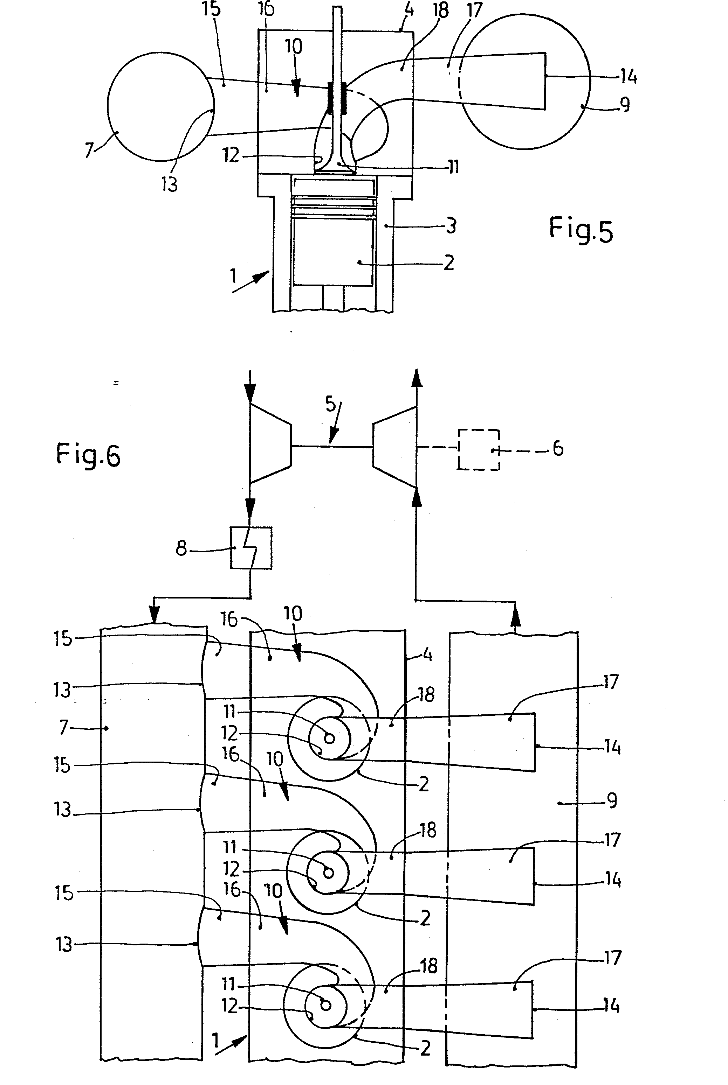

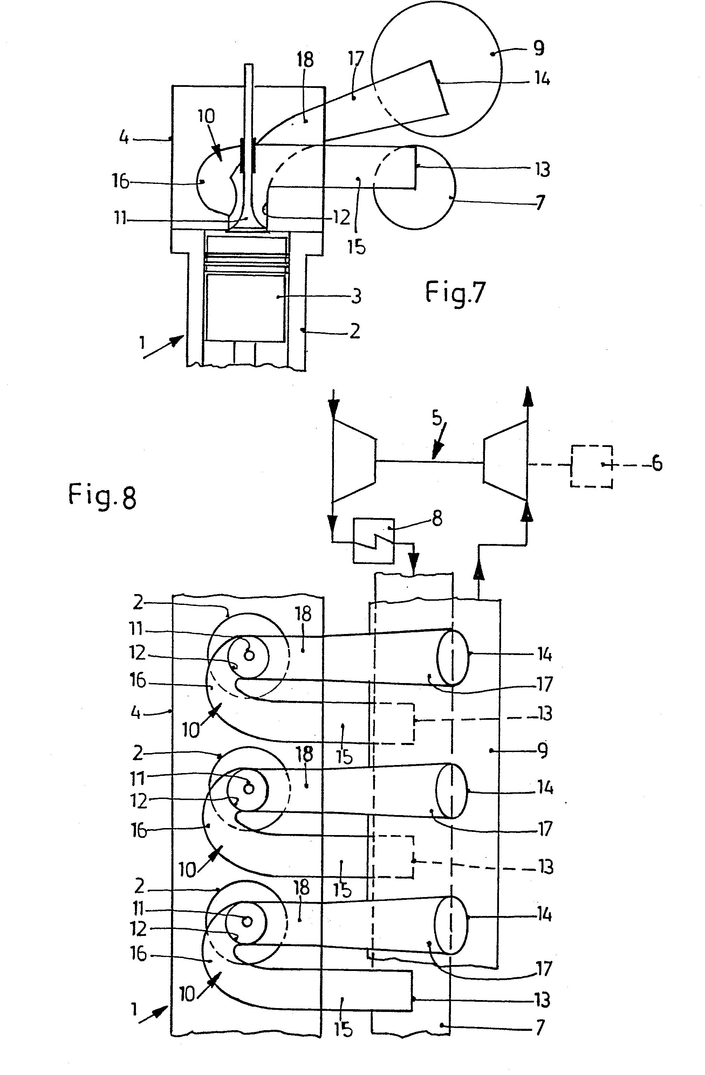

Eingangs kann jede Umblaseleitung 10 - wie bei den Ausführungsbeispielen der Figuren 1, 2, 7, 8 und 9, 10 - bis in die Ladeluftsammelleitung 7 hineinragen oder auch, wie bei den Ausführungsbeispielen gemäß Fig. 3, 4, 5, 6, und 11, 12, außen von der Ladeluftsammelleitung 7 abzweigen. Ferner kann jede Umblaseleitung 10
wie bei den Ausführungsbeispielen gemäß Fig. 1, 2, 3, 4, 7, 8, 9,
10 und 11, 12 wenigstens im zwischen der ladeluftsammelleitungsseitigen Eintrittsebene 13 und ihrem Eintritt in den Zylinderkopf 4
gelegenen Teil 15 einen gleichbleibenden Querschnitt aufweisen.
Wie im Ausführungsbeispiel gemäß Fig.5, 6 gezeigt, kann jede Umblaseleitung 10 sich jedoch auch von ihrer ladeluftsammelleitungsseitigen Eintrittsebene 13 aus zunehmend verjüngen. Zweckmäßigerweise ist das Volumen jeder Umblaseleitung 10 in deren Bereich
von der ladeluftsammelleitungsseitigen Eintrittsebene 13 bis zur
Abzweigstelle des Gaswechselkanales 12 so bemessen, daß es etwa
dem 0,7fachen des Hubvolumens eines Zylinders 2 entspricht. Vorteilhafterweise besitzt jede Umblaseleitung 10 in ihren Abschnitten 15 und 16 eine weitgehend konstante Querschnittsfläche,
die gleich dem 1,8- bis 2,2fachen der bei voll offenem Gaswechselventil 11 gegebenen, effektiv wirksamen Einlaßfläche $A_{Eeff}$
ist. Diese effektiv wirksame Einlaßfläche $A_{Eeff}$ ist von Fall zu
Fall unterschiedlich und muß an einer gegebenen Maschine durch
Versuche ermittelt werden. Diese effektiv wirksame Einlaßfläche
ist, bedingt durch Dralleinflüsse, Druckunterschiede und besondere geometrische Gegebenheiten im Gaswechselraum vor dem Gaswechselventilsitz kleiner als die tatsächlich bei voll offenem
Gaswechselventil zwischen der Schließfläche und der Sitzfläche
am Zylinderkopf freigegebenen, ringförmigen Einlaßfläche. Nach
Ermittlung der Größe der effektiv wirksamen Einlaßfläche $A_{Eeff}$
sind dann bei gegebenem Hubvolumen der Zylinder 2, die Form und

./.

Größe der Umblaseleitungen 10 sowie der Gaswechselkanäle 12 festlegbar und konstruktiv nachvollziehbar. Für den Fall einer sich von der ladeluftsammelleitungsseitigen Eintrittsebene 13 aus verjüngenden Umblaseleitung 10, wie im Beispiel gemäß Fig.5, 6 gezeigt, sollte die Umblaseleitung 10 in ihren Bereichen 15 und 16 eine mittlere Querschnittsfläche aufweisen, die auch hier dem 1,8- bis 2,2fachen der bei voll offenem Gaswechselventil 11 gegebenen, effektiv wirksamen Einlaßfläche $A_{Eeff}$ ist.

Ausgangsseitig ist jede Umblaseleitung 10 bis in die Abgassammelleitung 9 hinein verlängert, jedoch nur so weit, daß die austretenden Gase strömungsgünstig und möglichst verlustarm umgelenkt und dadurch auch mit größtmöglichem Wirkungsgrad im Aufladeaggregat 5 verwertet werden können. Jede Umblaseleitung 10 kann ausgangsseitig jedoch auch schon an der Außenseite der Abgassammelleitung 9 enden. Unabhängig davon ist jede Umblaseleitung 10 wenigstens in ihrem zwischen Zylinderkopf 4 und abgassammelleitungsseitigen Austrittsebene gelegenen Bereich 17 nach Art eines Diffusors sich querschnittsmäßig erweiternd ausgebildet. Wie die verschiedenen Ausführungsbeispiele zeigen, kann jede Umblaseleitung 10 entweder mittig oder außermittig von der Ladeluftsammelleitung 7 abzweigen. Darüber hinaus kann jede Umblaseleitung 10, wie in den einzelnen Figuren gezeigt, senkrecht stehend oder gegebenenfalls auch schräg stehend zur Längsachse der Ladeluftsammelleitung 7 von dieser abzweigen.

Darüber hinaus kann jede Umblaseleitung 10 senkrecht stehend oder schräg stehend mit zum Aufladeaggregat 5 hinweisender Neigung zur Längsachse der Abgassammelleitung 9 in letztere einmünden. Die Einmündung in die Abgassammelleitung 9 kann dabei mittig oder außermittig erfolgen.

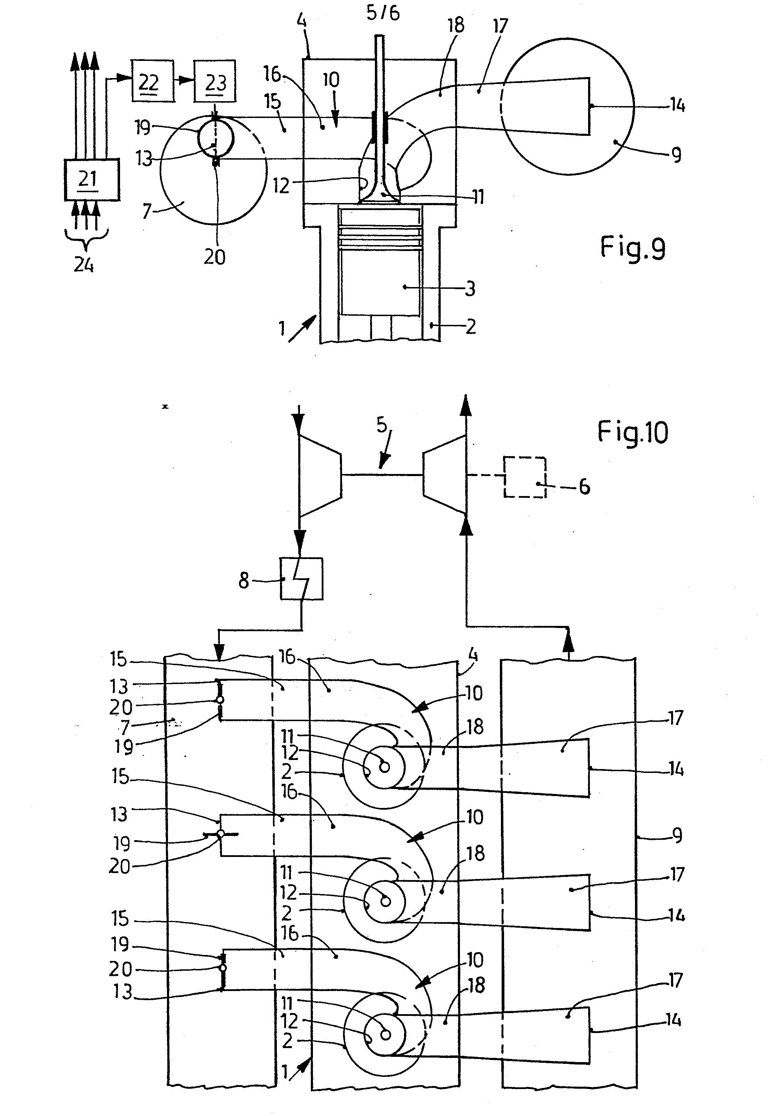

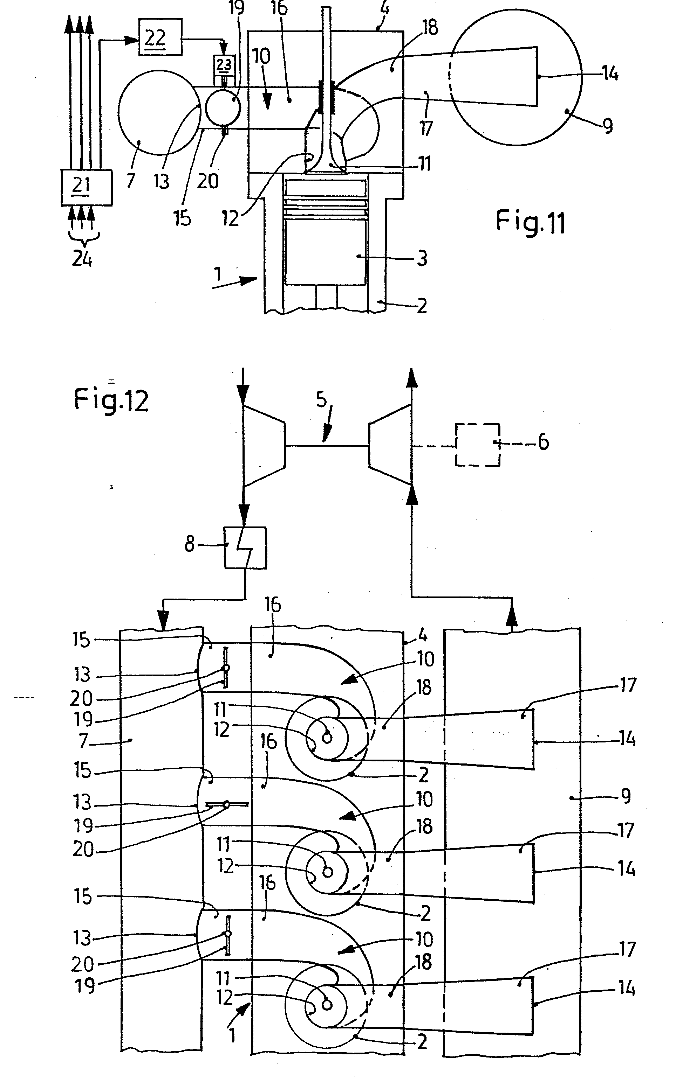

Bei den in den Figuren 1 bis 8 dargestellten Ausführungsbeispielen ist über die Umblaseleitungen 10 eine permanente Verbindung zwischen der Ladeluftsammelleitung 7 und der Abgassammelleitung 9 gegeben, so daß ständig Ladeluft in einer bestimmten Menge von

.⁄.

der Ladeluftsammelleitung 7 zur Abgassammelleitung 9 hin umgeblasen wird, mit der Folge, daß im Aufladeaggregat 5 ständig
eine erhöhte Arbeitsgasmenge wirksam ist. Bei den Ausführungsbeispielen gemäß Fig. 9, 10 und 11, 12 ist für eine taktweise Steuerung von in jede Umblaseleitung 10 einströmender Ladeluft je
ein Drosselorgan 19 vorgesehen; in diesem Fall können die Abschnitte 15 und 16 jeder Umblaseleitung 10 hinsichtlich ihrer
Querschnittsfläche von der weiter vorn auf Seite 6 angegebenen Bemessung abweichen. Das Drosselorgan 19 kann, wie beim Ausführungsbeispiel gemäß Fig. 9, 10, eingangs jeder Umblaseleitung 10 in deren Eintrittsebene 13, oder wie beim Ausführungsbeispiel gemäß Fig. 11, 12, etwas abgesetzt von der Eintrittsebene 13 im Anfangsbereich 15 derselben wirksam sein. Als Drosselorgan erweist sich insbesondere eine einfache Drosselklappe als
vorteilhaft, die um eine die Umblaseleitung 10 symmetrisch durchsetzende Achse 20 verschwenkbar ist. Jedes Drosselorgan 19 ermöglicht eine Einstellung des Querschnittes jeder Umblaseleitung 10
von vollem Durchlaß auf minimalen Durchlaß. Das Drosselorgan 19
ist an eine Taktsteuerung angeschlossen, die einen Taktgeber 21
und eine Drosselorganbetätigungseinrichtung 22, 23 umfaßt.
Die Betätigung des Drosselorganes 19 kann dabei durch das Betätigungselement  23 mechanisch, pneumatisch, hydraulisch oder elektrisch vollzogen werden. Die Bereitstellung der entsprechenden
Steuerkräfte erfolgt über das Teil 22 der Betätigungseinrichtung.
Als Taktgeber 21 ist vorzugsweise ein Mikroprozessor verwendet,
der auf der Basis ihm über Meldekanäle 24 signalisierter Istwerte von betriebsabhängig sich ändernden Parametern arbeitet,
bei denen es sich z.B. um die Leistung, die Drehzahl, den Ladedruck, die Druckdifferenz zwischen der Ladeluftsammelleitung
und der Abgassammelleitung, Temperatur vor Turbine oder um
eine Kombination einiger solcher Parameter handeln kann. Die
Steuerung des Drosselorganes 19 ist dabei auf die Vier-Takt-
Steuerung des Gaswechselventiles 11 abgestellt und auf den
Luftbedarf in der Umblaseleitung 10 synchronisiert.

0123074

Durch das erfindungsgemäße Vorsehen der Umblaseleitungen 10 und deren spezielle Ausgestaltung ist sichergestellt, daß Ladeluft in die Zylinder mit kleinem Widerstand so einströmen kann, daß im Zylinder ein Drall entsteht, andererseits Abgas mit kleinem Widerstand in die Abgassammelleitung 9 ausströmen kann. Bei geschlossenem Gaswechselventil 11 ist einem direkten Luftstrom von der Ladeluftsammelleitung 7 zur Abgassammelleitung 9 durch die spezielle Führung der Umblaseleitung 10 innerhalb des Zylinderkopfes 4 ein erhöhter Widerstand entgegengesetzt, mit der Folge, daß zwar eine bestimmte Luftmenge umblasbar ist, jedoch der Druck der Ladeluft in der Ladeluftsammelleitung 7 nicht unter ein gewünschtes Niveau absinkt. Das Gaswechselventil 11 kann entweder direkt im Zylinderkopf 4 oder in einem dort eingesetzten Ventilkorb sitzen, der auch Teile einer Umblaseleitung 10 und den Gaswechselkanal 12 beinhaltet. Das Gaswechselventil 11 selbst ist für seine Betätigung an einem in der Zeichnung nicht dargestellten Steuerungsantrieb angeschlossen, der für eine maschinensynchrone Betätigung sorgt.

Patentansprüche:

1. Aufgeladene Vier-Takt-Brennkraftmaschine mit einem abgasbetriebenen, erforderlichenfalls zeitweise auch fremdangetriebenen Aufladeaggregat, an das eine Ladeluftsammelleitung zur Verbrennungsluftversorgung der Zylinder sowie eine Abgassammelleitung zur Abgasaufnahme angeschlossen sind, zwischen denen wenigstens eine Umblaseleitung zur Umblasung von Ladeluft verlegt ist,
dadurch gekennzeichnet,
daß je Zylinder (2) eine durch dessen Zylinderkopf (4) führende sowie eine direkte Verbindung zwischen Ladeluftsammelleitung (7) und Abgassammelleitung (9) herstellende Umblaseleitung (10; 13, 14, 15, 16, 17, 18) vorgesehen ist, über welch jede

   1. permanent oder taktweise gesteuert Ladeluft für eine Erhöhung der im Aufladeaggregat (5) wirksamen Arbeitsgasmenge von der Ladeluftsammelleitung (7) zur Abgassammelleitung (9) umblasbar ist, und

   2. gesteuert durch ein einziges Gaswechselventil (11) über einen kurzen, von ihr abzweigenden Gaswechselkanal (12) dem zugehörigen Zylinder (2) die erforderliche Verbrennungsluftmenge zuführbar ist sowie

   3. auch die anfallenden Abgase zur Abgassammelleitung (9) hin abführbar sind,

   wobei jede Umblaseleitung (10; 13, 14, 15, 16, 17, 18) innerhalb des Zylinderkopfes (4) eine, einen Strömungswiderstand bildende Form aufweist und derart gestaltet ist, daß

   a) bei geschlossenem Gaswechselventil (11) Ladeluft in begrenzter Menge von der Ladeluftsammelleitung (7) zur Abgassammelleitung (9) hindurch,

./.

b) Ladeluft bei offenem Gaswechselventil (11) mit kleinem
   Widerstand in den Zylinder (2), und

c) Abgas bei offenem Gaswechselventil (11) mit kleinem
   Widerstand aus dem Zylinder (2) zur Abgassammelleitung (9)
   hin
strömen kann.

2. Aufgeladene Vier-Takt-Brennkraftmaschine nach Anspruch 1,
   dadurch gekennzeichnet, daß jede Umblaseleitung (10; 13, 14,
   15, 16, 17, 18) eingangs bis in die Ladeluftsammelleitung (7)
   hineinragt.

3. Aufgeladene Vier-Takt-Brennkraftmaschine nach Anspruch 1,
   dadurch gekennzeichnet, daß jede Umblaseleitung (10; 13, 14,
   15, 16, 17, 18) eingangs außen von der Ladeluftsammelleitung (7) abzweigt.

4. Aufgeladene Vier-Takt-Brennkraftmaschine nach einem der
   vorhergehenden Ansprüche, dadurch gekennzeichnet, daß jede
   Umblaseleitung (10; 13, 14, 15, 16, 17, 18) wenigstens im
   zwischen der ladeluftsammelleitungsseitigen Eintrittsebene (13) und ihrem Eintritt in den Zylinderkopf (4) gelegenen Teil (15) einen gleichbleibenden Querschnitt aufweist.

5. Aufgeladene Vier-Takt-Brennkraftmaschine nach einem der
   Ansprüche 1 bis 3, dadurch gekennzeichnet, daß jede Umblaseleitung (10; 13, 14, 15, 16, 17, 18) sich von ihrer ladeluftsammelleitungsseitigen Eintrittsebene (13) aus zunehmend verjüngt.

6. Aufgeladene Vier-Takt-Brennkraftmaschine nach einem der vorhergehenden Ansprüche, dadurch gekennzeichnet, daß das Volumen der Umblaseleitung (10; 13, 14, 15, 16, 17, 18) von
   der ladeluftsammelleitungsseitigen Eintrittsebene (13) bis
   zur Abzweigstelle des Gaswechselkanales (12) etwa dem 0,7-
   fachen des Hubvolumens des angeschlossenen Zylinders (2)
   entspricht.

7. Aufgeladene Vier-Takt-Brennkraftmaschine nach einem der Ansprüche 1 bis 4 und 6, dadurch gekennzeichnet, daß jede Umblaseleitung (10; 13, 14, 15, 16, 17, 18) von ihrer ladeluftsammelleitungsseitigen Eintrittsebene (13) bis zur Abzweigstelle des Gaswechselkanales (12) eine weitgehend konstante Querschnittsfläche aufweist, die gleich dem 1,8 - 2,2fachen der bei voll offenem Gaswechselventil (11) gegebenen, effektiv wirksamen Einlaßfläche ($A_{Eeff}$) ist.

8. Aufgeladene Vier-Takt-Brennkraftmaschine nach einem der Ansprüche 1 bis 5, dadurch gekennzeichnet, daß jede Umblaseleitung (10; 13, 14, 15, 16, 17, 18) im Fall einer sich von ihrer ladeluftsammelleitungsseitigen Eintrittsebene (13) aus verjüngenden Form eine mittlere Querschnittsfläche aufweist, die gleich dem 1,8- bis 2,2fachen der bei voll offenem Gaswechselventil (11) gegebenen, effektiv wirksamen Einlaßfläche ($A_{Eeff}$) ist.

9. Aufgeladene Vier-Takt-Brennkraftmaschine nach einem der vorhergehenden Ansprüche, dadurch gekennzeichnet, daß jede Umblaseleitung (10; 13, 14, 15, 16, 17, 18) ausgangs bis in die Abgassammelleitung (9) hinein verlängert ist.

10. Aufgeladene Vier-Takt-Brennkraftmaschine nach einem der Ansprüche 1 bis 8, dadurch gekennzeichnet, daß jede Umblaseleitung (10; 13, 14, 15, 16, 17, 18) ausgangs bis zur Außenseite der Abgassammelleitung (9) reichend an diese angeschlossen ist.

11. Aufgeladene Vier-Takt-Brennkraftmaschine nach einem der vorhergehenden Ansprüche, dadurch gekennzeichnet, daß jede Umblaseleitung (10; 13, 14, 15, 16, 17, 18) wenigstens in ihrem Bereich (17) zwischen Zylinderkopf (4) und abgassammelleitungsseitiger Austrittsebene (14) zu letzterer hin nach Art eines Diffusors sich querschnittsmäßig erweiternd ausgebildet ist.

0123074

12. Aufgeladene Vier-Takt-Brennkraftmaschine nach einem der vorhergehenden Ansprüche, dadurch gekennzeichnet, daß jede Umblaseleitung (10; 13, 14, 15, 16, 17, 18) mittig von der Ladeluftsammelleitung (7) abzweigt.

13. Aufgeladene Vier-Takt-Brennkraftmaschine nach einem der Ansprüche 1 bis 11, dadurch gekennzeichnet, daß jede Umblaseleitung (10; 13, 14, 15, 16, 17, 18) außermittig von der Ladeluftsammelleitung (7) abzweigt.

14. Aufgeladene Vier-Takt-Brennkraftmaschine nach einem der vorhergehenden Ansprüche, dadurch gekennzeichnet, daß jede Umblaseleitung (10; 13, 14, 15, 16, 17, 18) senkrecht stehend zur Längsachse der Ladeluftsammelleitung (7) von dieser abzweigt.

15. Aufgeladene Vier-Takt-Brennkraftmaschine nach einem der Ansprüche 1 bis 13, dadurch gekennzeichnet, daß jede Umblaseleitung (10; 13, 14, 15, 16, 17, 18) schräg stehend zur Längsachse der Ladeluftsammelleitung (7) von dieser abzweigt.

16. Aufgeladene Vier-Takt-Brennkraftmaschine nach einem oder mehreren der vorhergehenden Ansprüche, dadurch gekennzeichnet, daß jede Umblaseleitung (10; 13, 14, 15, 16, 17, 18) senkrecht stehend zur Längsachse der Abgassammelleitung (9) in letztere einmündet.

17. Aufgeladene Vier-Takt-Brennkraftmaschine nach einem oder mehreren der Ansprüche 1 bis 15, dadurch gekennzeichnet, daß jede Umblaseleitung (10; 13, 14, 15, 16, 17, 18) schräg stehend mit zum Aufladeaggregat (5) hinweisender Neigung zur Längsachse der Abgassammelleitung (9) in letztere einmündet.

18. Aufgeladene Vier-Takt-Brennkraftmaschine nach einem oder mehreren der vorhergehenden Ansprüche, dadurch gekennzeichnet, daß jede Umblaseleitung (10; 13, 14, 15, 16, 17, 18) mittig in die Abgassammelleitung (9) einmündet.

./.

0123074

19. Aufgeladene Vier-Takt-Brennkraftmaschine nach einem oder mehreren der Ansprüche 1 bis 17, dadurch gekennzeichnet, daß jede Umblaseleitung (10; 13, 14, 15, 16, 17, 18) außermittig in die Abgassammelleitung einmündet.

20. Aufgeladene Vier-Takt-Brennkraftmaschine nach einem oder mehreren der vorhergehenden Ansprüche, dadurch gekennzeichnet, daß der kurze, von jeder Umblaseleitung (10; 13, 14, 15, 16, 17, 18) abzweigende Gaswechselkanal (12) koaxial zur Achse des Gaswechselventiles (11) verläuft.

21. Aufgeladene Vier-Takt-Brennkraftmaschine nach einem oder mehreren der vorhergehenden Ansprüche, dadurch gekennzeichnet, daß die Achse des Gaswechselkanales (12) und die Achse jenes Teiles (17, 18) der Umblaseleitung (10; 13, 14, 15, 16, 17, 18), das von der Abzweigstelle bis zur abgassammelleitungsseitigen Austrittsebene (14) verläuft, in einer Ebene liegen, die auch die Längsachse des Ladungswechselventiles (11) aufnimmt.

22. Aufgeladene Vier-Takt-Brennkraftmaschine nach einem oder mehreren der vorhergehenden Ansprüche, dadurch gekennzeichnet, daß jenes Teil (18) der Umblaseleitung (10; 13, 14, 15, 16, 17, 18), das sich von der abgassammelleitungsseitigen Austrittsebene (14) bis zur Abzweigstelle des Gaswechselkanales (12) erstreckt, innerhalb des Zylinderkopfes (4) bogenförmig gekrümmt verläuft und in strömungsgünstiger Form in den Gaswechselkanal (12) übergeht.

23. Aufgeladene Vier-Takt-Brennkraftmaschine nach einem oder mehreren der vorhergehenden Ansprüche, dadurch gekennzeichnet, daß jenes Teil (15, 16) der Umblaseleitung (10; 13, 14, 15, 16, 17, 18), das sich von der ladeluftsammelleitungsseitigen Eintrittsebene (13) bis zur Abzweigstelle des Gaswechselkanales (12) erstreckt, innerhalb des Zylinderkopfes (4) spiralförmig verwunden verläuft und oberhalb der Abzweigstelle des Gaswechselkanales (12) seitlich in jenen Teil (18)

./.

der Umblaseleitung (10; 13, 14, 15, 16, 17, 18), der zur Abgassammelleitung (9) führt, einmündet, wobei die verwundene
Leitungsführung der Umblaseleitung (10; 13, 14, 15, 16, 17,
18) oberhalb der Abzweigstelle des Gaswechselkanales (12) den
für den gewünschten Umblase- und Ladungswechselverlauf erforderlichen Strömungswiderstand bildet.

24. Aufgeladene Vier-Takt-Brennkraftmaschine nach einem oder mehreren der vorhergehenden Ansprüche, dadurch gekennzeichnet,
    daß zur taktweisen Steuerung von einströmender Ladeluft eingangs der Umblaseleitung (10; 13, 14, 15, 16, 17, 18) oder
    im Anfangsbereich (15) derselben ein steuerbares Drosselorgan (9), insbesondere eine Drosselklappe vorgesehen ist,
    das eine Einstellung des Querschnitts der Umblaseleitung (10;
    13, 14, 15, 16, 17, 18) von vollem Durchlaß auf minimalen
    Durchlaß ermöglicht und an eine Taktsteuerung (21, 22, 23,
    24) angeschlossen ist, welche einen Taktgeber (21), insbe-
    sondere Mikroprozessor, und eine Drosselorganbetätigungsein-
    richtung (22, 23) umfaßt.

<u>Bezugszeichenliste</u>

| | |
|---|---|
| 1 | BKM |
| 2 | Zylinder |
| 3 | Kolben |
| 4 | Zylinderköpfe |
| 5 | Aufladeaggregat |
| 6 | Fremdantrieb |
| 7 | Ladeluftsammelleitung |
| 8 | Ladeluftkühler |
| 9 | Abgassammelleitung |
| 10 | Umblaseleitung |
| 11 | Gaswechselventil |
| 12 | Gaswechselkanal |
| 13 | Eintrittsebene v.10 |
| 14 | Austrittsebene v.10 |
| 15 | Abschnitt v. 10 u. 13 bis 4 |
| 16 | Abschnitt v. 10 u. 15 bis 12 |
| 17 | Abschnitt v. 10 u. 14 bis 4 |
| 18 | Abschnitt v. 10 u. 17 bis 12 |
| 19 | Drosselorgan |
| 20 | Achse von 19 |
| 21 | Taktgeber |
| 22 | Betätigungseinrichtung f.19 |
| 23 | Betätigungseinrichtung f.19 |
| 24 | Meldekanäle |

0123074

Fig.1

Fig.2

Fig.3

Fig.4

Fig.5

Fig.6

0123074

Fig.7

Fig.8

0123074

Fig.9

Fig.10

Fig.11

Fig.12